# EUROPEAN PATENT SPECIFICATION

(11) **EP 1 386 105 B1**
(45) Date of publication and mention of the grant of the patent: **01.09.2004**
(21) Application number: 02733605.6
(22) Date of filing: 03.05.2002
(51) Int. Cl.: F16L 9/133

(54) **REINFORCED PIPE FOR A PRESSURISED MEDIUM**
VERSTÄRKTES ROHR FÜR DRUCKMITTEL
TUYAU RENFORCE POUR MILIEU SOUS PRESSION

(30) Priority: 03.05.2001 NL 1017986
(43) Date of publication of application: 04.02.2004
(73) Proprietor: Pipelife Nederland B.V., 1600 AJ Enkhuizen (NL)
(72) Inventor: DALMOLEN, Lambertus, Gerrit, Peter, NL-1019 SE Amsterdam (NL)
(74) Representative: van Westenbrugge, Andries
(86) International application number: PCT/NL2002/000295
(87) International publication number: WO 2002/090812

(56) References cited:
- WO-A-99/66246
- DE-A- 2 105 120
- DE-U- 9 416 759
- FR-A- 2 023 250
- US-A- 3 334 663

## Description

The invention relates to a pipe for transporting a pressurised medium, comprising a plastic pipe body as well as reinforcement for absorbing the tensile forces arising as a consequence of the overpressure, which reinforcement is constructed as a strip of plastic material containing a series of wires of a relatively high tensile strength and/or rigidity, which wires extend alongside one another in the longitudinal direction of the strip of plastic material, which strip of plastic material containing wires is wound spirally with respect to the plastic pipe body.

A pipe of this type is known. The plastic pipe body provides the desired tightness, whilst the reinforcement provides the requisite resistance to the internal overpressure of the medium. The media concerned can be gases and/or fluids. By means of suitable choice of the plastic material for the pipe body, the pipe can be used for a wide variety of purposes. The use of such a pipe in the extraction and transport of hydrocarbons, such as crude oil and natural gas, is mentioned as an example. Such products can contain aggressive constituents, such as sulphur compounds, which a steel pipe is less well able to withstand.

The pressures and temperatures of such media to be transported are high. A pressure of, for example, 200 bar and a temperature of 60 °C - 140 °C must be assumed. For these reasons it is therefore also necessary to provide the plastic pipe body with reinforcement.

In this context it is known to wind fibres or wires which have a high tensile strength and rigidity around the plastic pipe body. The use of aramide fibres, which are incorporated in a strip of plastic material, is mentioned as an example.

According to another possibility the fibres or wires are each separately wound around the pipe body at an angle of 50 - 55° with respect to the axis in a continuous process. The angle of winding is chosen to be alternately opposed, such that the fibres or wires are arranged crosswise over one another.

These known pipes have various disadvantages. The winding process is laborious and takes a relatively long time. The fibres or wires that are wound on the pipe body must then be provided with a protective layer. Especially in the case of steel wires this is extremely important with a view to preventing corrosion.

The aim of the invention is to provide a pipe of the abovementioned type that does not have these disadvantages. Said aim is achieved in that the reinforcement extends in the circumferential direction over the full length of the pipe body and comprises steel wires.

The pipe provided with a strip of plastic material containing steel wires first of all has an advantage with regard to production. Such a strip is simple to handle and in any event can be applied around the pipe body very much more easily than a series of separate wires. Furthermore, it is ensured that the wires are a uniform distance apart, since they are fixed in the plastic material of the strip.

In particular, the wires or fibres can be completely encased in the plastic material of the strip. In this case the wires or fibres are well protected against external influences. This is important especially in the case of steel wires, since in this case the risk of corrosion is minimal or even absent.

Preferably, in the pipe according to the invention the plastic material of the pipe body and the plastic material of the strip are compatible.

The cohesion between the pipe body and the reinforcement can be increased if the plastic material of the pipe body and the plastic material of the strip are fused to one another.

The invention will be explained in more detail below with reference to an illustrative embodiment shown in the figures.

Fig. 1 shows a perspective and sectional view of a pipe according to the invention.

Fig. 2 shows, on an enlarged scale, a section of strip-like material for the pipe as shown in Fig. 1.

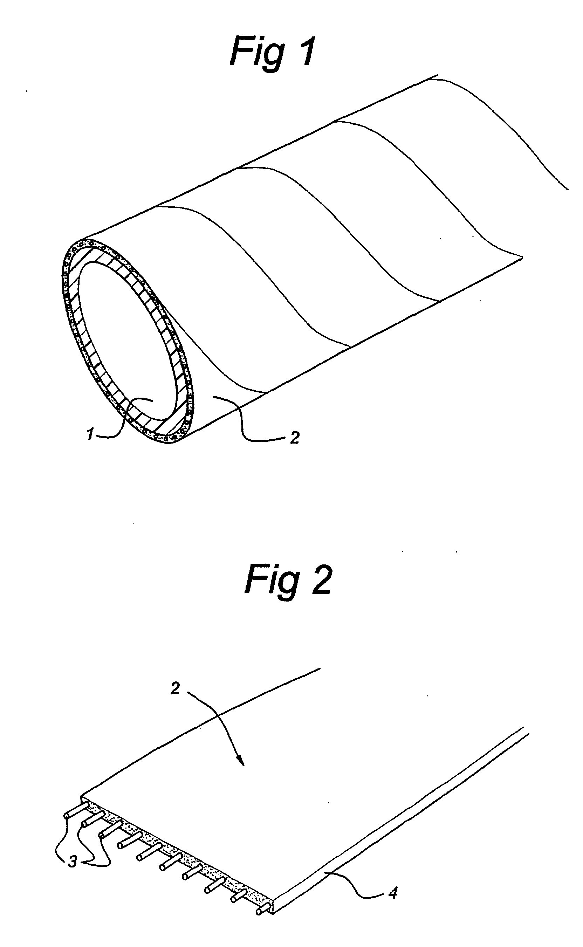

The pipe according to the invention shown in Fig. 1 comprises a plastic pipe body indicated in its entirety by 1, as well as a strip of plastic material 2 wound spirally around said pipe body 1. This strip of plastic material 2, which is also shown in Fig. 1, contains a number of steel wires 3 or steel cables of twisted steel wires extending alongside one another regular distances apart.

The strip 2 comprises a matrix 4 which preferably is of the same material as the plastic of the pipe body, for example polyethylene.

In the illustrative embodiment shown in Fig. 1 the strip of plastic material 2 is wound around the plastic pipe body I in such a way that the angle between the steel wires 3 and the axis of the pipe is approximately 53°. By this means a favourable stress and strain distribution in the pipe is obtained when an overpressure is applied to the interior of the latter.

The steel cables 3 are well embedded in the matrix material 4, such that the risk of rusting is minimal. The steel wires can optionally be galvanised.

The strip 2 is fused with the plastic pipe body 1. To this end the strip 2 is heated to the softening temperature, for example by means of infra-red heating. The plastic pipe body 1 can also be heated in advance. Excellent adhesion is then obtained on winding the strip 2 spirally around the pipe body.

## Claims

1. Pipe for transporting a pressurised medium, comprising a plastic pipe body (1) as well as reinforcement (2-4) for absorbing the tensile forces arising as a consequence of the overpressure, which reinforcement (2-4) is constructed as a strip of plastic material (2) containing a series of wires (3) of a relatively high tensile strength and/or rigidity, which wires (3) extend alongside one another in the longitudinal direction of the strip of plastic material (2), which strip of plastic material (2) containing wires (3) is wound spirally with respect to the plastic pipe body (1), **characterised in that** the reinforcement extends in the circumferential direction over the full length of the pipe body (1) and comprises steel wires (3).

2. Pipe according to Claim 1, wherein the series o steel wires (3) is encased by the strip of plastic material (2).

3. Pipe according to one of the preceding claims, wherein the reinforcement comprises a series of cables and each cable consists of twisted steel wires.

4. Pipe according to one of the preceding claims, wherein the plastic material of the pipe body (1) and the plastic material of the strip (2) are compatible.

5. Pipe according to Claim 4, wherein the plastic material of the pipe body (1) and the plastic material of the strip (2) are fused to one another.

6. Pipe according to one of the preceding claims, wherein the strip of plastic material (2) comprises polyethylene.

7. Pipe according to one of the preceding claims, wherein the pipe body (1) comprises polyethylene.

8. Pipe according to one of the preceding claims, wherein the steel wires (3) are galvanised.

## Patentansprüche

1. Rohr für Druckmittel, umfassend sowohl einen Kunststoffrohrkörper (1) als auch eine Verstärkung (2-4) zum Absorbieren der Dehnungskräfte, die als Folge des Überdrucks auftreten, die Verstärkung (2-4) ist hergestellt aus einem Streifen von Kunststoffmaterial (2), der eine Reihe von Kabel (3) mit einer relativ hohen Dehnungsfestigkeit und/oder -steifigkeit enthält, die Kabel (3) erstrecken sich längsseits nebeneinander in Längsrichtung des Streifens aus Kunststoffmaterial (2), der die Kabel (3) enthaltende Streifen aus Kunststoffmaterial (2) ist spiralförmig mit Bezug auf den Kunststoffrohrkörper (1) gewunden, **dadurch gekennzeichnet, dass** die Verstärkung sich in Umfangsrichtung über die volle Länge des Rohrkörpers (1) erstreckt und Stahlkabel (3) umfasst.

2. Rohr nach Anspruch 1, wobei die Reihe von Stahlkabeln (3) von dem Streifen aus Kunststoffmaterial (2) umgeben ist.

3. Rohr nach einem der vorangegangenen Ansprüche, wobei die Verstärkung eine Reihe von Kabeln umfasst und jedes Kabel aus gedrehten Stahldrähten besteht.

4. Rohr nach einem der vorangegangenen Ansprüche, wobei das Kunststoffmaterial des Rohrkörpers (1) und das Kunststoffmaterial des Streifens (2) kompatibel sind.

5. Rohr nach Anspruch 4, wobei das Kunststoffmaterial des Rohrkörpers (1) und das Kunststoffmaterial des Streifens (2) aneinander geschmolzen sind.

6. Rohr nach einem der vorangegangenen Ansprüche, wobei der Streifen aus Kunststoffmaterial (2) Polyethylen umfasst.

7. Rohr nach einem der vorangegangenen Ansprüche, wobei der Rohrkörper (1) Polyethylen umfasst.

8. Rohr nach einem der vorangegangenen Ansprüche, wobei die Stahlkabel (3) galvanisiert sind.

## Revendications

1. Tuyau pour transporter un milieu sous pression, comprenant un corps de tuyau (1) en plastique ainsi qu'un renforcement (2-4) pour absorber les forces de traction produites en conséquence de la surpression, lequel renforcement (2-4) est construit sous la forme d'une bande de matière plastique (2) renfermant une série de fils métalliques (3) d'une résistance à la traction et/ou d'une rigidité relativement élevées, lesquels fils métalliques (3) s'étendent les uns le long des autres dans la direction longitudinale de la bande de matière plastique (2), laquelle bande de matière plastique (2) renfermant les fils métalliques (3) est enroulée en spirale par rapport au corps de tuyau (1) en plastique, **caractérisé en ce que** le renforcement s'étend dans la direction circonférentielle sur toute la longueur du corps de tuyau (1) et comprend des fils en acier (3).

2. Tuyau selon la revendication 1, dans lequel la série de fils en acier (3) est enfermée par la bande de matière plastique (2).

3. Tuyau selon l'une quelconque des revendications précédentes, dans lequel le renforcement comprend une série de câbles et chaque câble consiste en fils d'acier torsadés.

4. Tuyau selon l'une quelconque des revendications précédentes, dans lequel la matière plastique du corps de tuyau (1) et la matière plastique de la bande (2) sont compatibles.

5. Tuyau selon la revendication 4, dans lequel la matière plastique du corps de tuyau (1) et la matière plastique de la bande (2) sont soudées l'une à l'autre par fusion.

6. Tuyau selon l'une quelconque des revendications précédentes, dans lequel la bande de matière plastique (2) comprend du polyéthylène.

7. Tuyau selon l'une quelconque des revendications précédentes, dans lequel le corps de plastique (1) comprend du polyéthylène.

8. Tuyau selon l'une quelconque des revendications précédentes, dans lequel les fils en acier (3) sont galvanisés.
